# FASCICULE DE BREVET EUROPEEN

(11) **EP 2 110 655 B1**
(45) Date de publication et mention de la délivrance du brevet: **19.06.2013**
(21) Numéro de dépôt: 09305323.9
(22) Date de dépôt: 16.04.2009
(51) Int. Cl.: G01M 17/007

(54) **Dispositif de décéleration actif pour la réalisation d'essais selon une loi de commande donnée**
Vorrichtung zur aktiven Abbremsung nach einem bestimmten Gesetz während einer Testdurchführung.
Device for active deceleration according to a given law during tests

(30) Priorité: 18.04.2008 FR 0852646
(43) Date de publication de la demande: 21.10.2009
(73) Titulaire: AT2D, 46100 Cambes (FR)
(72) Inventeur: Paquotte, Stéphane, 46100, BEDUER (FR)

(56) Documents cités:
- EP-A- 1 657 538
- DE-A1- 4 330 122
- DE-A1- 10 059 613
- DE-A1- 10 222 086
- DE-A1- 10 338 052
- DE-A1- 19 511 422
- DE-A1- 19 541 318
- DE-A1- 19 857 429
- DE-C1- 3 421 546
- JP-A- 2 006 723
- JP-A- 7 325 007
- US-A- 2 810 288
- US-A1- 2004 230 394
- US-B1- 6 422 058

## Description

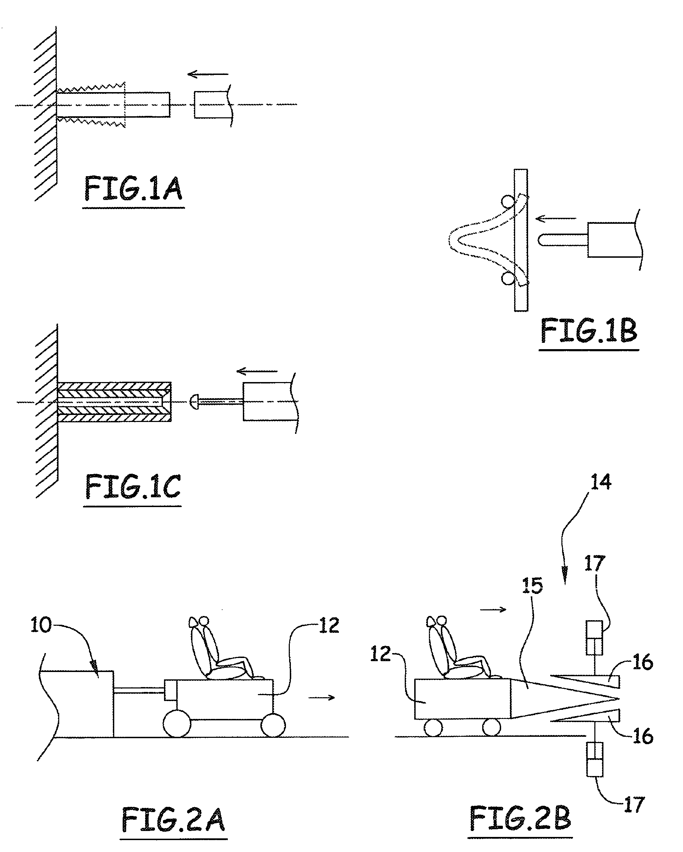

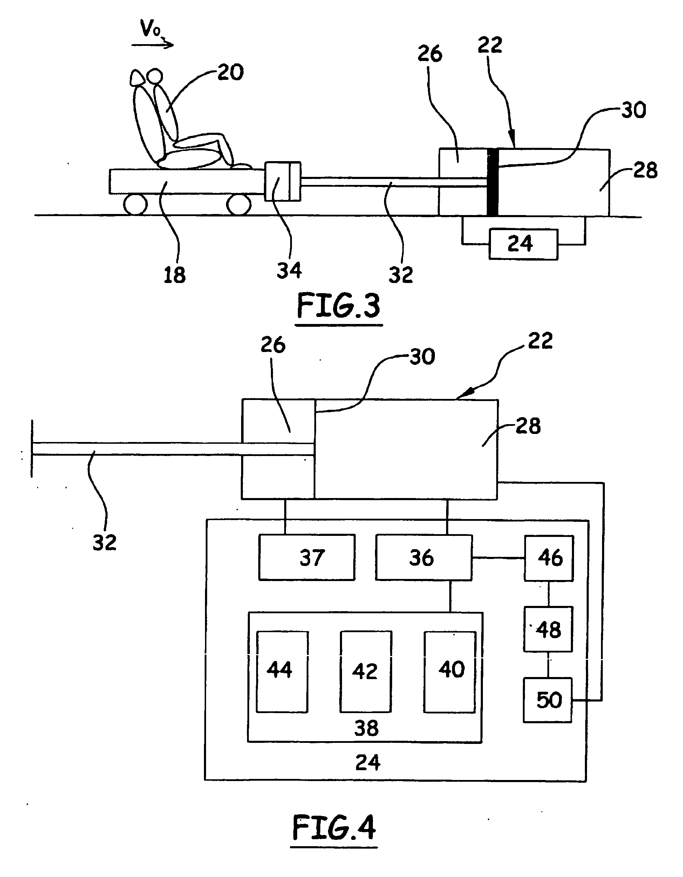

La présente invention est relative à un dispositif de décélération actif pour la réalisation d'essais selon une loi de commande donnée.
Dans un véhicule ou dans certains éléments d'un aéronef, des systèmes passifs de sécurité sont prévus pour assurer la protection des passagers du véhicule ou de l'aéronef en cas d'accident.
Airbags, élément ou coque à déformation programmée, ceintures avec tendeur et retenue progressive, pédalier rétractable et siège anti-sous-marinage, ..., sont conçus pour limiter les blessures des passagers lors d'une collision avec un obstacle ou un autre aéronef ou véhicule.
Afin d'étalonner leurs caractéristiques et de contrôler leur efficacité, tous ces systèmes passifs de sécurité doivent être validés par des séries de tests normalisés destinés à simuler les conditions et les contraintes dynamiques subies lors d'une collision.
Par exemple, dans le cas d'une simulation de choc frontal d'un véhicule contre un mur, un chariot équipé d'un siège, d'un spécimen, de composants ou parties d'un véhicule, un chariot équipé d'un siège, d'un spécimemen, de composants ou parties d'un véhicule, et/ou d'autres éléments utiles à la simulation, sont mis en vitesse par un dispositif adapté, tel une catapulte directe, et subissent ensuite une courbe de décélération normalisée sous l'action d'un dispositif de décélération.
Différents types de dispositifs de décélération sont utilisés actuellement pour simuler les conditions et les contraintes dynamiques lors d'une collision.
Tout d'abord, l'art antérieur comprend des premiers dispositifs de décélération dits passifs.
Un premier type de dispositif de décélération passif est illustré en figure 1A, il s'agit d'un tube à écrasement disposé face au chariot, son axe central étant parallèle à la direction d'arrivée du dispositif d'impact équipant le chariot.
Un deuxième type de dispositif de décélération passif est illustré en figure 1B, il s'agit d'une barre de flexion maintenue en deux points et dans la longueur de laquelle pénètre le dispositif d'impact équipant le chariot.
Enfin, un troisième type de dispositif de décélération passif est illustré en figure 1C, il s'agit de tubes en polyuréthane emmanchés l'un dans l'autre et dans lesquels pénètre le dispositif d'impact équipant le chariot.
Les tests menés avec ces trois types de dispositifs de décélération passifs sont destructifs.

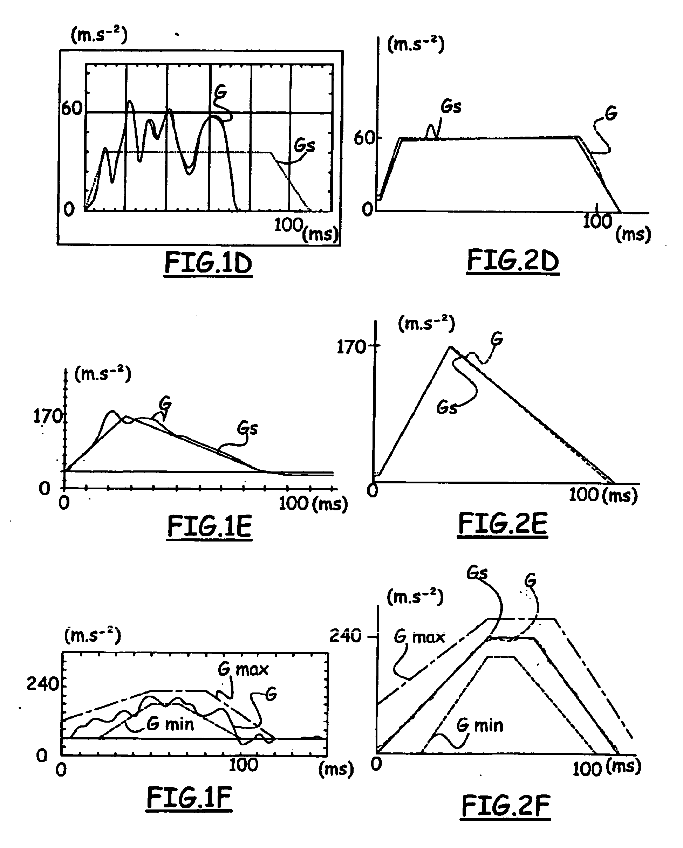

Les figures 1D, 1E et 1F illustrent des résultats obtenus avec l'un des précédents dispositifs de décélération passifs lors de la simulation d'une collision selon, respectivement, des, première, deuxième et troisième, lois de décélération issues des normes.
A titre indicatif, les résultats présentés sur ces figures 1D, 1E et 1F correspondent à des essais dans lesquels une masse, notamment un chariot et un spécimen, d'environ 500 Kg subit des décélérations maximales comprises entre 60 m/s² et 240 m/s² sur un temps de décélération d'environ 100 ms, ces conditions de simulation correspondant aux normes dont sont extraites les courbes.
Comme le montrent les figures 1D, 1E et 1F, les écarts entre les courbes représentatives de la loi de décélération souhaitée Gs, de la décélération G mesurée lors de l'essai, et des enveloppes Gmax et Gmin correspondant aux seuils de tolérance maximaux et minimaux, ils sont aujourd'hui utilisés à la limite de leur performance et ils ne permettent plus de répondre aux exigences de précision et de reproductibilité des lois de décélération imposées par les normes.
De plus, ces dispositifs passifs ne permettent pas de maîtriser avec précision la position du spécimen au début de la décélération.
Les différents véhicules et aéronefs étant équipés avec de plus en plus d'éléments de sécurité passifs pour parer au plus de situations possibles d'accident, le nombre de simulations à concevoir et donc le nombre de tests à réaliser avec différentes courbes de décélération normalisées ne cesse d'augmenter.
En réponse à ces besoins, des dispositifs actifs existent afin de reproduire le plus fidèlement possible et de façon non destructive les conditions d'un crash réel.
Les figures 2D, 2E et 2F illustrent les résultats obtenus avec le modèle numérique interne de l'invention lors de la simulation d'une collision selon, respectivement, les, première, deuxième et troisième, lois de décélération précitées.
Comme le montrent les figures 2D, 2E et 2F, les écarts entre les courbes représentatives de la loi de décélération souhaitée Gs et de la décélération G mesurée lors de l'essai sont fortement réduits en comparaison des écarts constatés lors d'une simulation avec un dispositif de décélération passif, et, la courbe représentative de la décélération G mesurée reste éloignée des enveloppes Gmax et Gmin correspondant aux seuils de tolérance maximaux et minimaux.
Comme l'illustre la figure 2A, un dispositif actif d'accélération de l'art antérieur, ou catapulte inverse, comporte des moyens de commande pilotant des moyens de poussée 10, tel un vérin, d'un chariot 12 selon une courbe de décélération, ledit chariot 12 supportant le spécimen testé, les composants ou parties d'un véhicule, et/ou d'autres éléments, et des moyens étant prévus pour arrêter le chariot 12 après la poussée.
L'efficacité de ce premier dispositif actif de l'art antérieur est basée sur les caractéristiques des moyens de poussée 10 qui doivent donc être dimensionnés pour reproduire et répéter fidèlement la poussé sur le chariot à accélérer.
Comme l'illustre la figure 2B, un dispositif actif de décélération de l'art antérieur comprend un chariot 12 et des moyens de décélération 14 gérés par des moyens de commande afin d'obtenir la décélération souhaitée. Lesdits moyens de décélération 14 prennent la forme de moyens de freinage par frottement comprenant une surface conique 15 entre deux surfaces 16 inclinées dont l'écartement est contrôlé par les moyens de commande via des actionneurs 17 tels des vérins.
Cette deuxième conception de l'art antérieur a l'inconvénient d'interposer des pièces, la surface conique et les surfaces inclinées, entre le chariot et les moyens permettant d'absorber l'énergie, c'est-à-dire les actionneurs, lors du choc. Ces pièces interposées et le frottement empêchent d'avoir une maîtrise totale de la courbe de décélération, tant en modélisation qu'en simulation.
Un autre dispositif actif de décélération de l'art antérieur comprend un chariot et un moyen de décélération géré par un moyen de commande afin d'obtenir la décélération souhaitée. Cependant, comme le décrit le document D1 (US-6.422.058), le freinage est obtenu par compression du gaz dans les vérins à gaz sélectionnés et non par laminage d'un fluide (de l'huile) au passage de la section d'une vanne proportionnelle comme décrit dans l'invention.
un autre dispositif actif de décélération de l'art antérieur comprend un chariot et un moyen de décélération géré par un moyen de commande afin d'obtenir la décélération souhaitée. Cependant, comme le décrit le document D4 (DE-10059613), l'utilisation de plusieurs vérin ne permet pas une courbe de décélération globale donnée du mobile mais la répartition de la déformation de la surface impacté sous l'effet du mobile impactant, contrairement à l'invention qui propose de décélérer globalement le mobile à l'aide d'un vérin unique.
Un autre dispositif actif de décélération de l'art antérieur comprend un chariot et un moyens de décélération géré par un moyen de commande afin d'obtenir la décélération souhaitée. Cependant, comme le décrit le document D9 (JP 2006723), c'est une succession de vanne tout ou rien pilotées en cascade qui controle la pression dans la chambre aval du verin.
Aussi, la présente invention vise à pallier aux inconvénients de l'art antérieur en proposant un dispositif de décélération actif capable de reproduire fidèlement et de répéter avec une marge d'erreur minimale une courbe de décélération donnée tout en limitant le coût de l'installation d'essais.
A cet effet l'invention a pour objet un dispositif de décélération actif d'un chariot supportant au moins un spécimen lancé à une vitesse non nulle pour la réalisation d'un essai selon une loi de décélération donnée, notamment dans le cadre d'une simulation d'accident ou de choc d'un véhicule ou d'un aéronef, ledit dispositif de décélération actif comprenant au moins un dispositif de freinage monté et travaillant en opposition directe du mouvement du chariot lancé, le dispositif de freinage étant un vérin piloté par des moyens de commande et entrant directement en contact avec le chariot pour le freiner selon la loi de décélération donnéé, ledit dispositif de décélération actif se **caractérisant en ce que** les moyens de commande pilotent le fonctionnement du vérin en boucle ouverte et comprennent au moins une vanne proportionnelle pilotée reliée à un réseau hydraulique.
L'utilisation d'une vanne proportionnelle nécessite la construction d'un modèle précis faisant intervenir des notions de dynamiques des fluides et de recalages expérimentaux.
Ainsi, le dispositif de décélération actif selon l'invention permet d'obtenir les mêmes résultats que ceux illustrés sur les figures 2D, 2E et 2F et pouvant être obtenus avec l'un des dispositifs de mise en vitesse (catapultes) existants, tout en permettant de diminuer le coût de l'installation d'essais.
D'autres caractéristiques et avantages ressortiront de la description qui va suivre de l'invention, description donnée à titre d'exemple uniquement, en regard des dessins annexés sur lesquels :
- les figures 1A, 1B et 1C représentent schématiquement trois dispositifs de décélération passifs selon l'art antérieur,
- les figures 1D, 1E et 1F illustrent des résultats obtenus lors de la simulation d'une collision selon trois lois de décélération issues des normes et avec un dispositif de décélération passif selon l'art antérieur,
- la figure 2A représente schématiquement un dispositif d'accélération actif selon l'art antérieur,
- la figure 2B représente schématiquement un dispositif de décélération actif selon l'art antérieur,
- les figures 2D, 2E et 2F illustrent des résultats obtenus lors de la simulation d'une collision selon trois lois de décélération issues des normes et avec l'invention,
- la figure 3 représente schématiquement un dispositif de décélération actif selon l'invention,
- la figure 4 représente schématiquement les moyens de commande du dispositif de freinage du dispositif de décélération actif selon l'invention.
Comme illustré en figure 3, la présente invention est relative à un dispositif de décélération actif d'un chariot 18 supportant au moins un spécimen 20 lancé à une vitesse Vo non nulle pour la réalisation d'un essai selon une loi de décélération donnée, notamment dans le cadre d'une simulation d'accident ou de choc d'un véhicule ou d'un aéronef.
Pour donner un ordre d'idées, le dispositif de décélération actif selon l'invention est susceptible de permettre la décélération d'une masse (chariot et spécimen) de 1500Kg lancée à une vitesse V₀ 20m/s (70km/h) sur une course de 1000 mm avec une décélération maximale d'environ 800m/s², ces performances étant susceptibles d'être adaptées aux besoins des clients et aux évolutions normatives. Le domaine d'application de l'invention pouvant s'étendre jusqu'à 1500 kg pour des vitesse de 20 m/s et des décélération de 1000m/s².

Le dispositif de décélération actif peut être utilisé pour tester par exemple la résistance d'ancrage de sièges automobiles lors d'un accident.
Bien entendu, le chariot 18 peut aussi supporter d'autres éléments ou parties de véhicule ou d'aéronef nécessaires à la réalisation de l'essai.
Le chariot 18 est lancé à la vitesse Vo par tous moyens appropriés et connus de l'homme du métier, tels que par exemple un dispositif de mise en vitesse aussi appelé catapulte directe.
Le dispositif de décélération actif comprend au moins un dispositif de freinage monté et travaillant en opposition directe du mouvement du chariot 18 lancé à Vo.
De préférence, le dispositif de décélération actif selon l'invention se présente sous la forme d'une installation hydraulique.
Le dispositif de freinage est un vérin 22 piloté par des moyens de commande 24 et comprenant une chambre amont 26 et une chambre aval 28 séparées par un piston 30 relié à une tige 32 destinée à recevoir le contact du chariot 18 pour le freiner selon la loi de décélération donnée.
Selon une caractéristique essentielle de l'invention, la tige 32 du vérin 22 agit directement sur le chariot 18 lancé, ledit vérin 22 étant monté et travaillant en opposition directe de la direction du mouvement du chariot 18 lancé pour le freiner selon la courbe de décélération donnée.
Ainsi, aucun système mécanique intermédiaire n'est introduit entre l'élément freinant et l'élément à freiner, ce qui permet d'obtenir une meilleure efficacité de freinage et une meilleure maîtrise de la dynamique de fonctionnement par rapport aux dispositifs de l'art antérieur.
Avantageusement, le châssis dudit chariot 18 est conçu pour répartir l'effort de décélération dans toute la structure dudit chariot.
Eventuellement, dans le cas où le dispositif de décélération est intégré à une installation d'essais existante comprenant déjà un chariot 18, le châssis dudit chariot peut être équipé d'un élément de protection 34 sans influence sur l'efficacité du freinage obtenu et permettant de répartir l'effort de décélération dans la structure du chariot.
En raison des pics d'efforts importants lors de la décélération, la tige 32 du vérin 22 peut être équipée de moyens de guidage robustes afin d'éviter le flambage de ladite tige, ia conception de ces moyens de guidage n'étant pas détaillée car faisant partie des connaissances de l'homme du métier.
Selon une caractéristique essentielle de l'invention, les moyens de commande 24 dudit vérin 22 comprennent au moins une vanne **proportionnelle** pilotée 36 reliée à un réseau hydraulique 38 comprenant au moins un groupe hydraulique 40 d'alimentation, au moins un accumulateur hydraulique 42 de stockage de fluide sous pression et au moins une bâche hydraulique 44 de récupération du fluide utilisé en sortie de la chambre aval 28.
Par l'intermédiaire de la vanne **proportionnelle** pilotée 36, le groupe hydraulique 40 d'alimentation et l'accumulateur hydraulique 42 permettent de pré-charger la chambre aval 28 du vérin avant l'essai.
Des moyens de précharge 37, hydrauliques ou pneumatiques, de la chambre amont 26 permettent par exemple d'amorcer le mouvement du piston 30 et de la tige 32 pour diminuer l'effort du pic d'entrée lors de l'impact avec le chariot 18 au cours d'un essai. Que ce soit pour compléter ou pour économiser les moyens de précharge 37, hydrauliques ou pneumatiques, l'élément de protection 34 prend la forme d'une interface intercalée entre la tige 32 et le chariot 18, ladite interface étant de préférence réalisée dans un matériau déformable tel que plastique, caoutchouc, polymère...
Ledit élément 34 joue ainsi un rôle de « tampon » permettant de filtrer les composantes hautes fréquences du choc, d'abaisser l'effort du pic d'entrée lors de l'impact et de gérer les premiers instants de la décélération du chariot 18 avant la mise en mouvement du fluide dans le vérin 22. La conception de ce moyen de filtrage n'étant pas détaillée car faisant partie des connaissances de l'homme du métier.

Ainsi, selon une caractéristique importante de l'invention, la vanne pilotée **proportionnelle** 36 contrôle la pression de la chambre aval 28 du vérin 22 en ajustant la section de passage du fluide, notamment de l'huile.
Cette pression étant directement reliée à l'effort de décélération, ladite vanne pilotée **proportionnelle** 36 permet donc de contrôler l'effort de décélération.
Selon les besoins de l'essai à réaliser, la vanne pilotée 36 est multi-étages afin d'être adaptée aux efforts de décélération à fournir et à la dynamique du système (temps de réponse).
Le fonctionnement de la vanne pilotée 36 est commandé par des moyens de pilotage 46 reliés à des moyens de calcul 48, notamment un ordinateur et une carte de pilotage temps réel.
Lesdits moyens de calcul 48 sont reliés à des moyens de mesure 50 de différents paramètres de fonctionnement de l'installation hydraulique, comme par exemple la position et l'accélération de la tige 32, la pression dans les chambres amont 26 et aval 28,..., lesdits paramètres étant utilisés pour renseigner les moyens de calcul 48.
Selon une autre caractéristique essentielle invention, étant donné la brièveté des courbes de décélération à reproduire, environ 100 ms pour donner un ordre d'idées, la vanne pilotée 36 est pilotée en boucle ouverte par lesdits moyens de pilotage 46 selon une loi de pilotage pré-établie.
En effet, si l'on considère le temps de réponse d'une vanne pilotée, au regard des masses embarquées et de la raideur de la colonne de fluide dans le vérin, le temps de réponse de l'installation hydraulique peut ne pas être compatible avec une régulation en boucle fermée de la pression dans la chambre aval 28.
Plus précisément, ladite loi de pilotage pré-établie de la vanne pilotée 36, ou vanne proportionnelle, est établie par les moyens de calcul 48 à partir de la modélisation du dispositif de décélération actif 16 selon l'invention et de la loi de décélération à reproduire.
Cette loi de pilotage pré-établie définit l'évolution théorique en fonction du temps de la section de vidange de la chambre aval 28 du vérin 22, et donc de la section d'ouverture de la vanne 36, permettant de parvenir à la loi de décélération à reproduire.
Lors de la réalisation d'un essai, cette loi d'ouverture pré-établie n'est pas corrigée en temps réel à partir de données, comme par exemple les mesures de décélération du chariot 18, transmises par les moyens de mesure 50, le fonctionnement du vérin 22 est donc piloté en boucle ouverte.
Le procédé d'exploitation du dispositif de décélération actif tel qu'il vient d'être présenté va maintenant être décrit pour la réalisation d'un essai selon une loi de décélération donnée sur une installation d'essais donnée.
Comme cela vient d'être énoncé, le procédé d'exploitation consiste à piloter la vanne 36 suivant une loi de pilotage pré-établie avant l'essai par les moyens de calcul 48.
Afin de générer la loi de pilotage, lesdits moyens de calcul 48 utilisent un modèle interne du dispositif de décélération actif selon l'invention et les informations relatives aux paramètres de fonctionnement transmises par les moyens de mesure 50 lors d'essais de calibration.
Plus précisément, les moyens de calcul 48 utilisent un modèle interne du fonctionnement hydraulique du dispositif de décélération actif afin de générer une loi de pilotage théorique correspondant à la loi de décélération attendue.
Cette loi de pilotage théorique de la vanne pilotée 36 est utilisée pour la réalisation d'un premier essai de calibration avec mesure de la décélération réelle du chariot 18 supportant le spécimen 20 par les moyens de mesure 50.
Avantageusement, les différents essais de calibration peuvent être menés avec un faux spécimen respectant la masse et les points d'ancrage sur le chariot 18 du spécimen 20 à tester.
Ensuite, les moyens de calcul 48 prennent en compte la différence entre la décélération théorique et la décélération réelle pour générer une nouvelle loi de pilotage de la vanne pilotée 36.
Cette nouvelle loi de pilotage est utilisée pour la réalisation d'un deuxième essai de calibration, toujours avec mesure de la décélération réelle du chariot 18.
Plusieurs essais de calibration, 3 ou 4 pour donner un ordre d'idées, sont ainsi menés par itération afin d'aboutir à la loi de pilotage optimale respectant les contraintes imposées par les normes pour l'installation donnée et pour un couple loi de décélération/masse du spécimen donné.
De manière avantageuse, la loi de pilotage optimale de la vanne pilotée 36 obtenue grâce aux essais de calibration pour chaque couple loi de décélération/masse du spécimen peut être enregistrée par les moyens de calcul 48 afin d'être réutilisée par les moyens de pilotage 46 lors de la réalisation d'un essai sur la même installation et pour un même couple loi de décélération/masse du spécimen.
On constate que le type d'installation hydraulique qui vient d'être décrite, sans aucun système mécanique intermédiaire introduit entre l'élément freinant et l'élément à freiner et avec une loi de pilotage préétablie, offre un fonctionnement extrêmement précis et reproductible.
Ainsi, lors de la réalisation de deux essais avec un même couple loi de pilotage/masse du spécimen, le présent dispositif de décélération actif permet d'observer deux décélérations sensiblement identiques du chariot 18 supportant le spécimen 20.
Bien entendu, l'invention couvre toute application et toute variante du dispositif de décélération actif pouvant être imaginée à partir de la présente description, le dispositif de décélération actif et son procédé d'exploitation étant adaptables (en masse, course, décélération, ...) à différents moyens d'essais dans lesquels une masse, notamment autre qu'un chariot ou un spécimen, est mise en vitesse.

## Revendications

1. Dispositif de décélération actif d'un chariot (18) supportant au moins un spécimen (20) lancé à une vitesse Vo non nulle pour la réalisation d'un essai selon une loi de décélération donnée, notamment dans le cadre d'une simulation d'accident ou de choc d'un véhicule ou d'un aéronef, ledit dispositif de décélération actif comprenant au moins un dispositif de freinage monté et travaillant en opposition directe du mouvement du chariot (18) lancé à Vo, le dispositif de freinage étant un vérin (22) piloté par des moyens de commande (24) et entrant directement en contact avec le chariot (18) pour le freiner selon la loi de décélération donnée, **caractérisé en ce que** les moyens de commande (24) pilotent le fonctionnement du vérin (22) en boucle ouverte et comprennent au moins une vanne **proportionnelle** pilotée (36) reliée à un réseau hydraulique (38).

2. Dispositif de décélération actif d'un chariot (18) selon la revendication 1, **caractérisé en ce que** le fonctionnement du vérin (22) est piloté selon une loi de pilotage préétablie par les moyens de commande (24).

3. Dispositif de décélération actif d'un chariot (18) selon la revendication 1 ou 2, **caractérisé en ce que** le vérin (22) comprend une chambre amont (26) et une chambre aval (28) séparées par un piston (30) relié à une tige (32) destinée à recevoir directement le contact du chariot (18) pour le freiner selon la loi de décélération donnée.

4. Dispositif de décélération actif d'un chariot (18) selon l'une des revendications 1 à 3, **caractérisé en ce que** le réseau hydraulique (38) comprend au moins un groupe hydraulique (40) d'alimentation, au moins un accumulateur hydraulique (42) et au moins une bâche hydraulique (44).

5. Dispositif de décélération actif d'un chariot (18) selon l'une des revendications 1 à 4, **caractérisé en ce que** la vanne proportionnelle pilotée (36) contrôle la pression de la chambre aval (28) du vérin (22) afin de contrôler l'effort de décélération.

6. Dispositif de décélération actif d'un chariot (18) selon l'une des revendications 1 à 5, **caractérisé en ce que** le fonctionnement de la vanne proportionnelle pilotée (36) est commandée par des moyens de pilotage (46) selon une loi de pilotage pré-établie par des moyens de calcul (48), notamment un ordinateur, reliés à des moyens de mesure (50) de différents paramètres de fonctionnement du dispositif de décélération actif.

## Patentansprüche

1. Aktive Verzögerungsvorrichtung für einen Schlitten (18), der mindestens einen Dummy (20) trägt, abgestoßen mit einer Geschwindigkeit V0 (>0), für die Durchführung eines Tests nach vorgegebenen Verzögerungskriterien, zur Simulation eines Flugzeugabsturzes oder eines Fahrzeugunfalles. Diese aktive Vorrichtung, besteht mindestens aus einer Bremsvorrichtung die direkt in Gegenrichtung zur Bewegung des auf V0 beschleunigten Schlittens (18) wirkt. Die Bremsvorrichtung ist ein Hydraulikzylinder (22) geregelt durch eine Steuereinheit (24) die in direktem Kontakt mit dem Schlitten (18) steht um diesen mit den vorgegebenen Verzögerungskriterien zu bremsen. Die Steuereinheit regelt den Zylinder (22) in einem offenen Regelkreis mittels einem Proportionalventil (36) verbunden mit einem hydraulischen Netzwerk (38).

2. Die aktive Verzögerungsvorrichtung für einem Schlitten (18) nach Anspruch 1, ist **dadurch gekennzeichnet, dass** die Regelung des Zylinders (22) durch eine Steuereinheit (24) mit voreingestellten Verzögerungskriterien erfolgt.

3. Die aktive Verzögerungsvorrichtung für einem Schlitten (18) nach Anspruch 1 bis 2, ist **dadurch gekennzeichnet, dass** der Zylinder (22) eine Einfahrkammer (26) und eine Ausfahrkammer (28) besitzt die durch den Kolben (30) getrennt wird. Der Kolben (30) ist unmittelbar mit der Stange (32) verbunden diese zur direkten Aufnahme des Schlittens (18) dient um diesen nach vorgegebenen Verzögerungskriterien zu bremsen.

4. Die aktive Verzögerungsvorrichtung für einem Schlitten (18) nach Anspruch 1 bis 3, ist durch das Hydraulische Netzwerk gekennzeichnet, dass mindestens aus einer Hydraulischen Versorgungseinheit (40), einem Hydraulischem Speicher und einem Hydraulischen Tank besteht.

5. Die aktive Verzögerungsvorrichtung von einem Schlitten (18) nach Anspruch 1 bis 4, ist durch das Proportionalventil (36) gekennzeichnet, dass durch die Messung des Drucks in der Nachkammer (28) des Zylinders (22) die Bremsleistung kontrolliert.

6. Die aktive Verzögerungsvorrichtung für einem Schlitten (18) nach Anspruch 1 bis 5, ist aufgrund des Betriebs des Proportionalventils durch eine Steuereinheit (46) gemäß im Voraus festgelegten Ansteuerungskriterien, durch einem mit Messgeräten (50) verbundenen Computer (48), der die verschiedenen Leistungs-Parameter der aktiven Verzögerungsvorrichtung misst, gekennzeichnet.

## Claims

1. Active deceleration device for a trolley (18) carrying a specimen (20) launched with a velocity Vo (different from Zero) to perform deceleration test following a given deceleration law and reproduce accident or crash simulation for vehicle or aircraft. The deceleration device is composed by minimum, a braking device working in direct opposition of the movement of the trolley (18) launched to V₀. The braking device is a hydraulic cylinder (22) piloted by command devices (24) and directly in contact with the trolley to brake it following the deceleration law. The command devices (24) are piloting the cylinder (22) in open loop with a proportional Valve (36) connected to an hydraulic network (38).

2. Active deceleration device for a trolley (18) regarding claims 1, is **characterized by** the cylinder (22) piloted by a driving law predetermined by control devices (24).

3. Active deceleration device for a trolley (18) regarding claims 1 and 2, is **characterized by** the cylinder (22) including a upstream chamber (26) and a downstream chamber (28) separated by a piston (30) connected to a rod (32) dedicated to receive the direct contact of the trolley (18) to brake it following the given deceleration law.

4. Active deceleration device for a trolley (18) regarding claims 1 to 3, is **characterized by** the hydraulic network (38) including minimum an hydraulic supplying group (40), minimum an hydraulic accumulator (42) and minimum an hydraulic tank (44).

5. Active deceleration device for a trolley (18) regarding claims 1 to 4, is **characterized by** the proportional valve piloted (36) and controlling the pressure of the downstream chamber (28) of the cylinder (22) in order to control the deceleration effort.

6. Active deceleration device for a trolley (18) regarding claims 1 to 5, is **characterized by** the operation of the proportional Valve (36) controlled by control device (46) according to a piloting law pre-established by computing device (48), and specially a computer connected to measurement devices (50), of different parameters of the performance of the Active deceleration device.
